# EUROPEAN PATENT APPLICATION

(11) **EP 4 083 470 A1**
(43) Date of publication of application: **02.11.2022**
(21) Application number: 22169781.6
(22) Date of filing: 25.04.2022
(51) Int. Cl.: F16H 7/00, F16H 33/02, H02K 7/02

(54) **DRIVE DEVICE WITH MULTIPLE SWINGING BLOCKS DRIVINGLY CONNECTED WITH EACH OTHER**

(30) Priority: 29.04.2021 TW 110115606
(71) Applicant: Hsu, Po-Chi, Qianzhen, Kaohsiung City 806040 (TW); Hsu Chu, Yu-Lien, Qianzhen, Kaohsiung City 806040 (TW); Hsu, Chia Ming, Qianzhen, 806040 Kaohsiung City (TW)
(72) Inventor: Hsu, Po-Chi, Qianzhen, Kaohsiung City 806040 (TW); Hsu Chu, Yu-Lien, Qianzhen, Kaohsiung City 806040 (TW); Hsu, Chia Ming, Qianzhen, 806040 Kaohsiung City (TW)
(74) Representative: Cabinet Chaillot

(57) **Abstract**

A drive device with multiple swinging blocks drivingly connected with each other includes a driven unit connected with a driven apparatus (such as a power generation motor or a generator), a driving unit drivingly connected with the driven unit and an actuating unit connected with the driving unit. The driven unit includes a flywheel. The driving unit includes three dynamic energy modules respectively connected with the flywheel at intervals. Each dynamic energy module has a gear engaged with the flywheel and a swinging block disposed on the gear. There is a 120-degree angle difference between the corresponding angular positions of each two adjacent swinging blocks. The actuating unit includes an actuating motor, a driving member driven by the actuating motor and connected with one of the dynamic energy modules and transmission members drivingly connected with the dynamic energy modules for driving the driven unit to together rotate.

## Description

### 1. Field of the Invention

The present invention relates generally to a drive device, and more particularly to a drive device including multiple sets of dynamic energy modules with swinging blocks. The dynamic energy modules are drivingly connected with each other to compensate each other for the fluctuation of the operational power.

### 2. Description of the Related Art

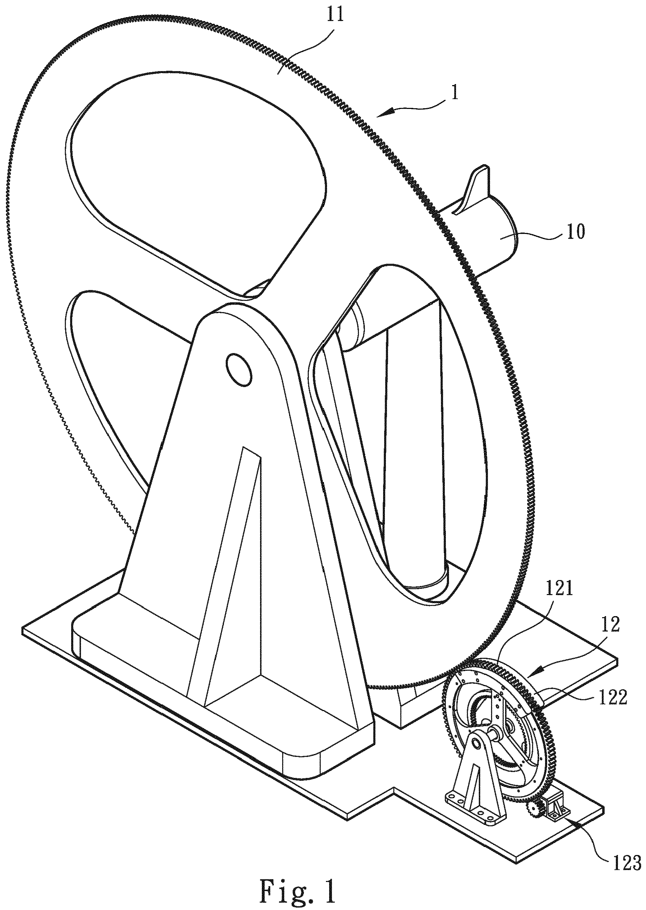

Fig. 1 shows a conventional drive device 1 applicable to a generator 10. The drive device 1 includes a toothed disc 11 drivingly connected with the generator 10 and a driving unit 12 connected with the toothed disc 11 for driving the toothed disc 11 to rotate. The driving unit 12 includes a flywheel 121 engaged with the toothed disc 11, a weight module 122 secured on the flywheel 121 and a motor 123 for providing initial power for the flywheel 121 to rotate. When the motor 123 provides initial power, the driving unit 12 is driven to start operating. With the radius of the flywheel 121 as a moment arm, the weight module 122 can provide swinging torque for the toothed disc 11. Accordingly, when the flywheel 121 rotates, the toothed disc 11 is driven to rotate so as to drive the generator 10 to operate.

However, the swing of the weight module 122 is simply controlled by the gravity in a position where the weight module 122 is positioned. Therefore, when the flywheel 121 is driven by the swinging torque of the weight module 122 to rotate, in the ascending and descending processes of the swing, the action direction of the gravity will continuously change to obviously cause unstable operation speed of the flywheel 121. As a result, when the toothed disc 11 is driven to rotate, a condition of unstable operation speed also takes place. Therefore, the generator 10 can be hardly stably driven to operate. This needs to be improved.

### SUMMARY OF THE INVENTION

It is therefore a primary object of the present invention to provide a drive device with multiple swinging blocks drivingly connected with each other. The drive device with multiple swinging blocks drivingly connected with each other can more stably provide driving function.

The drive device with multiple swinging blocks drivingly connected with each other of the present invention is applicable to a driven apparatus for driving the driven apparatus, (such as a power generation motor or a generator). The drive device includes a driven unit connected with the driven apparatus, a driving unit drivingly connected with the driven unit and an actuating unit connected with the driving unit.

The driven unit includes a flywheel. The flywheel is coaxially or non-coaxially connected with the driven apparatus and has multiple teeth formed on an outer circumference of the flywheel.

The driving unit includes three dynamic energy modules respectively connected with the flywheel at intervals. Each dynamic energy module has a gear engaged with the teeth of the flywheel and a swinging block disposed on the gear. In case the positions of the respective swinging blocks on the corresponding gears are indicated in accordance with the corresponding angles in a two-dimensional coordinate system, there is a 120-degree angle difference between the corresponding positions of the respective swinging blocks on the respective gears of the dynamic energy modules.

The actuating unit includes an actuating motor for providing actuating rotational power, a driving member driven by the actuating motor and connected with one of the dynamic energy modules, whereby when the actuating motor is powered on, the actuating motor drives the dynamic energy modules and the driven unit to together rotate.

The driving member may be connected with two driven members respectively via two transmission members to drive the two driven members, the two driven members being respectively drivingly connected with the other two dynamic energy modules.

The effect of the present invention lies in that there is a 120-degree angle difference between the positions of the corresponding swinging blocks respectively disposed on the gears of the dynamic energy modules of the driving unit. Therefore, when the gears are together rotated, optionally via the transmission members, and the swinging blocks wobble due to gravity, the timings of drops of rotational speeds are staggered from each other and uniformly distributed over the entire power transmission process. Therefore, the fluctuations of the driving powers of the respective swinging blocks are complementary to each other. In this case, after the driven unit is driven, the operational speed of the driven unit is more balanced and stabilized. Accordingly, the driven apparatus can be more stably driven.

The present invention can be best understood through the following description and accompanying drawings, wherein:

### BRIEF DESCRIPTION OF THE DRAWINGS

Fig. 1 is a perspective view of a conventional drive device;
Fig. 2 is a front view of an embodiment of the drive device with multiple swinging blocks drivingly connected with each other of the present invention, showing the driven unit and the driving unit of the present invention;
Fig. 3 is a bottom view of the embodiment of the drive device with multiple swinging blocks drivingly connected with each other of the present invention, showing the actuating unit of the present invention;
Fig. 4 is an enlarged view of a part of Fig. 3, showing one of the dynamic energy modules of the driving unit; and
Fig. 5 is a front view of the embodiment of the drive device with multiple swinging blocks drivingly connected with each other of the present invention according to Fig. 2, showing the operation of the present invention.

### DETAILED DESCRIPTION OF THE PREFERRED EMBODIMENTS

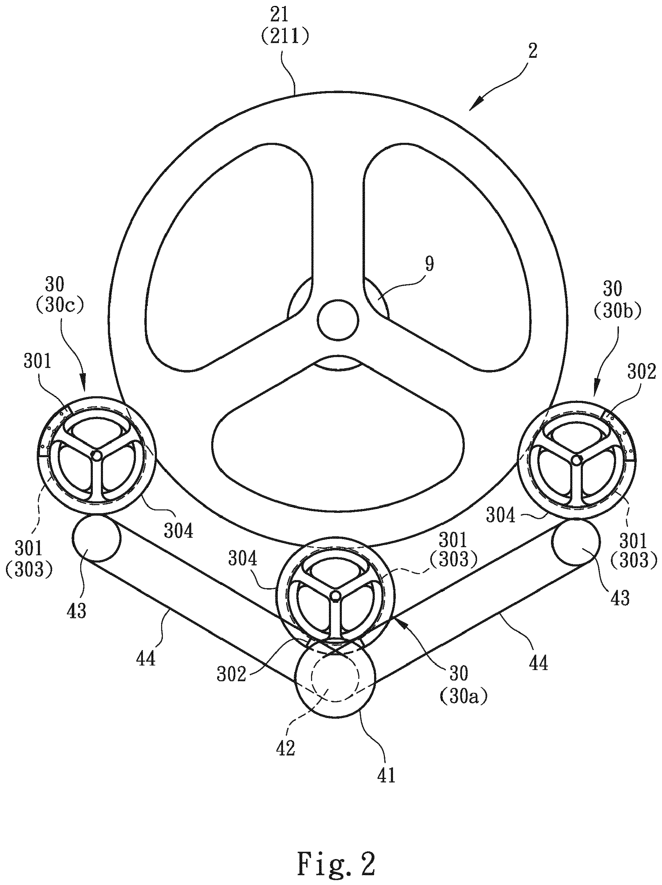

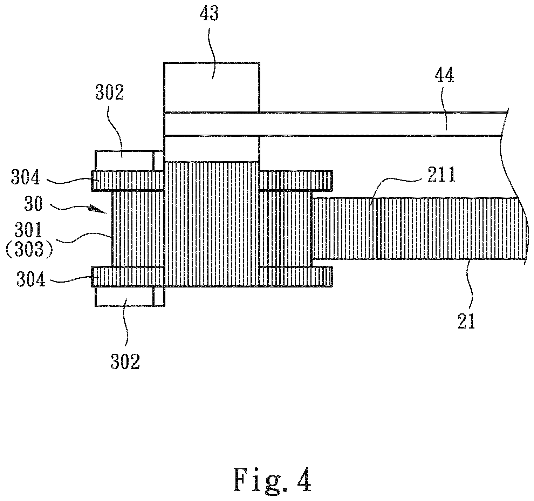

Please refer to Fig. 2, which shows an embodiment of the drive device with multiple swinging blocks drivingly connected with each other of the present invention. The drive device of the present invention is applicable to a driven apparatus 9 to drive the driven apparatus 9, (such as a power generation motor or a generator). According to this embodiment, the drive device with multiple swinging blocks drivingly connected with each other of the present invention includes a driven unit 2 connected with the driven apparatus 9, a driving unit 3 drivingly connected with the driven unit 2 and an actuating unit 4 connected with the driving unit 3. The driven unit 2 includes a flywheel 21 coaxially or non-coaxially drivingly connected with the driven apparatus 9. The flywheel 21 has multiple teeth 211 formed on an outer circumference of the flywheel 21 (as shown in Fig. 4). That is, the flywheel 21 is actually a large-scale gear. In this embodiment, the driven apparatus 9 is, but not limited to, a generator for illustration purposes. That is, the driven unit 2 and the driven apparatus 9 substantially can be a wind power generator set with the blades replaced. However, the drive device with multiple swinging blocks drivingly connected with each other of the present invention can be used to drive any apparatus, which needs to be powered by a specific mechanism to operate.

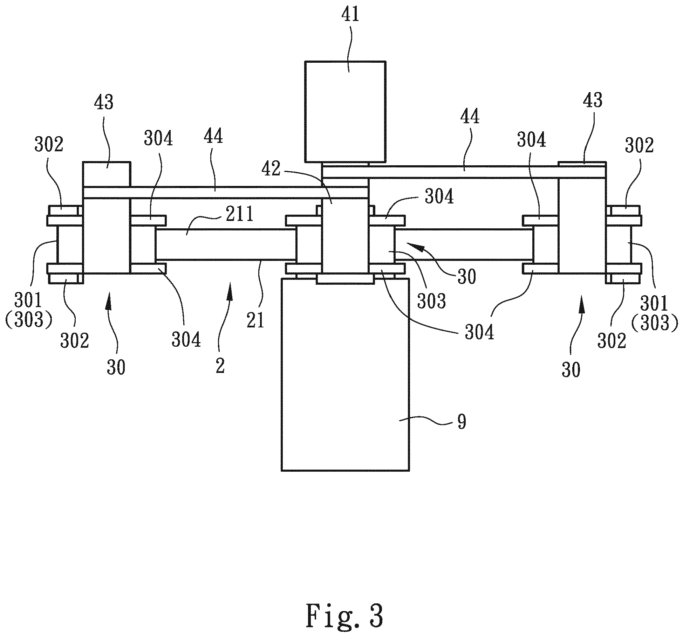

Please refer to Figs. 2 and 3. The driving unit 3 includes three dynamic energy modules 30 respectively connected with the flywheel 21 at intervals. In case the angular positions of the respective dynamic energy modules 30 relative to the flywheel 21 are indicated in accordance with the corresponding angles in a two-dimensional coordinate system, the dynamic energy modules 30 are positioned under the flywheel 21 and the angle difference between the positions of the dynamic energy modules 30 relative to flywheel 21 is preferably 60 degrees. In addition, the angular intervals between any two adjacent dynamic energy modules 30 are equal to each other. Each dynamic energy module 30 has a gear 301 engaged with the teeth 211 of the flywheel 21 and a swinging block 302 disposed on the gear 301. Each gear 301 has a small-diameter section 303 engaged with the teeth 211 of the flywheel 21 and two large-diameter sections 304 respectively axially attached to two sides of the small-diameter section 303 and radially outward extending. Each swinging block 302 has two side block sections 320 respectively symmetrically secured to the large-diameter sections 304. Accordingly, the side block sections 320 are arranged in balance to stably drive the respective gears 301 to rotate so that the unstable swing caused by uneven weights on two sides of one single gear 301 can be avoided. Also, the swinging block 302 is disposed on the large-diameter section 304 to form a longer moment arm than the small-diameter section 303, whereby the driving unit 3 can provide greater driving torque for driving the driven apparatus 9 and achieve the strength-saving effect.

Please refer to Fig. 2. In case the positions of the respective swinging blocks 302 on the corresponding gears 301 are indicated in accordance with the corresponding angles in a two-dimensional coordinate system, there is a 120-degree angle difference between the corresponding angular positions of the respective swinging blocks 302 on the respective gears 301 of the dynamic energy modules 30. Therefore, in case the swinging blocks 302 of the three dynamic energy modules 30 are positioned on the same 360-degree circle, it appears that the respective swinging blocks 302 are approximately initially evenly positioned on one single dynamic energy module 30 in three angular positions between which the angle differences are 120 degrees. The radius of the flywheel 21 of the driven unit 2 is larger than the radius of the gear 301 of each dynamic energy module 30, whereby the flywheel 21 and the dynamic energy modules 30 can be conveniently set up to form a complete systemized mechanism.

Please refer to Figs. 2 to 4. The actuating unit 4 includes an actuating motor 41 for providing actuating rotational power and a driving member 42 driven by the actuating motor 41 and connectable with one of the dynamic energy modules 30. The other two dynamic energy modules can simply drivingly connected with the flywheel 21. Alternatively, the other two dynamic energy modules can be respectively drivingly connected with two driven members 43 and two transmission members 44 are respectively connected between the driving member 42 and the driven members 43. Accordingly, when the actuating motor 41 is powered on, the actuating motor 41 can drive the dynamic energy modules 30 to together rotate. To speak more specifically, the driving member 42 and the driven members 43 are gear members respectively engaged with the large-diameter sections 304 of the gears 301, while the transmission members 44 can be selectively belts (or toothed belts) fitted around the gear members.

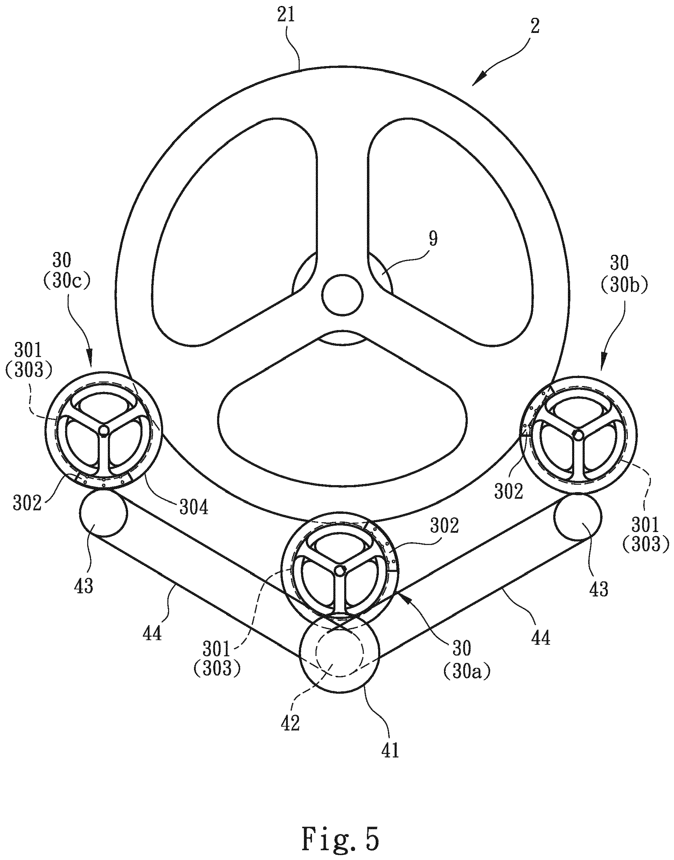

Please refer to Figs. 5 and 2. In order to facilitate the illustration of the operation of this embodiment of the present invention, in Fig. 5, the dynamic energy modules 30 are respectively denoted with reference numerals of 30a, 30b, 30c, while the actuating motor 41 and the driving member 42 are connected with the dynamic energy module 30a. When the actuating motor 41 operates, the driving member 42 and the gear 301 of the dynamic energy module 30a are driven by the actuating motor 41 to start rotating. The transmission members 44 connected between the driving member 42 and the driven members 43 serve to transmit the dynamic rotational energy of the driving member 42 to the driven members 43, whereby the gears 301 of the dynamic energy modules 30b, 30c are together driven to start rotating. Then, once the dynamic energy modules 30 are all successfully rotated to stably drive the flywheel 21 of the driven unit 2, the actuating motor 41 can be turned off at proper time to stop driving the dynamic energy modules 30. By means of the moment of inertia stored in the dynamic energy modules 30 and the flywheel 21, the potential energy is converted into dynamic energy to together drive the driven apparatus 9 to operate.

It should be especially noted that the swinging blocks 302 are arranged by an angular interval of 120 degrees. Therefore, when any of the swinging blocks 302 of the corresponding gears 301 swings from a lowest point back to a highest point and the rotational speed is reduced, the other swinging blocks 302 of the gears 301 swing from the highest point back to the lowest point. In this case, the acceleration effect created when the swinging blocks 302 descend will compensate the aforesaid reduced rotational speed, whereby the operation speed can be more stably balanced as a whole. To describe the operation of the present invention in accordance with the positions shown in Fig. 2, when the swinging block 302 of the dynamic energy module 30a moves to the bottommost end, in condition that the moment of inertia still remains, the swinging block 302 of the dynamic energy module 30b right passes over the highest point to create impulse of falling body acceleration. At this time, the dynamic energy module 30c is driven by the aforesaid moment of inertia and acceleration impulse to pass over the highest point and continuously cycle to compensate and drive each other. In addition, the swinging blocks 302 can create different torques in different positions so that when the swinging blocks 302 wobble due to gravity, the timings of drops of rotational speeds are staggered from each other. Therefore, the fluctuations of the rotational speeds of the swinging blocks 302 are complementary to each other to achieve a balanced state. This can eliminate the stumbling and unstable phenomenon in the process of rotation due to drop of the rotational speed. Therefore, in the state that the swinging blocks 302 are drivingly connected with each other, the operation speed of the driven unit 2 can be more stabilized and balanced. Accordingly, the driven apparatus 9 can be more stably driven.

In addition, the radius of the flywheel 21 of the driven unit 2 is much larger than the radius of the gear 301 of each dynamic energy module 30. Therefore, when the flywheel 21 is driven to stably operate, the moment of inertia stored in the flywheel 21 is mush greater than the moment of inertia of each one single gear 301. Under such circumstance, even if the respective dynamic energy modules 30 have a trend to create the aforesaid drop of rotational speed in the operation process, under the effect of the great moment of inertia and stable operation of the flywheel 21, the drop of rotational speed can be still effectively compensated and balanced so that under the mutual compensation and driving, the operation of the entire drive device can keep stable and balanced.

In conclusion, the drive device with multiple swinging blocks drivingly connected with each other of the present invention is such designed that there is a 120-degree angle difference between the relative angular positions of the swinging blocks 302 on the respective gears 301. Therefore, when the gears 301 are together rotated via the transmission members 44, the swinging blocks 302 are drivingly connected with each other. In this case, the dynamic energy modules 30 can compensate each other for the fluctuation of the operational power of the sole dynamic energy module 30 so as to achieve a more stable and balancing effect. This just can eliminate the shortcoming of the conventional drive device that drop of rotational speed takes place in rotation. Therefore, the operational speed of the driven unit 2 can be more stabilized so as to more stably drive the driven apparatus 9. Accordingly, the object of the present invention can be truly achieved.

The above embodiments are only used to illustrate the present invention, not intended to limit the scope thereof. Many modifications of the above embodiments can be made without departing from the spirit of the present invention.

## Claims

1. A drive device with multiple swinging blocks drivingly connected with each other, the drive device being applicable to a driven apparatus, the drive device comprising:
a driven unit connected with the driven apparatus, the driven unit including a flywheel drivingly connected with the driven apparatus, the flywheel having multiple teeth formed on an outer circumference of the flywheel;
a driving unit drivingly connected with the driven unit, the driving unit including three dynamic energy modules respectively connected with the flywheel at intervals, each dynamic energy module having a gear engaged with the teeth of the flywheel and a swinging block disposed on the gear, in case the angular positions of the respective swinging blocks on the corresponding gears are indicated in accordance with the corresponding angles in a two-dimensional coordinate system, there is a 120-degree angle difference between the corresponding angular positions of the respective swinging blocks on the respective gears of the dynamic energy modules; and
an actuating unit connected with the driving unit, the actuating unit including an actuating motor for providing actuating rotational power and a driving member driven by the actuating motor and connected with one of the dynamic energy modules, whereby when the actuating motor is powered on, the actuating motor drives the driving member, the dynamic energy modules and the driven unit to together rotate.

2. The drive device with multiple swinging blocks drivingly connected with each other as claimed in claim 1, wherein the driving member is connected with two driven members respectively via two transmission members to drive the two driven members, the two driven members being respectively drivingly connected with the other two dynamic energy modules.

3. The drive device with multiple swinging blocks drivingly connected with each other as claimed in claim 1, wherein the radius of the flywheel of the driven unit is larger than the radius of the gear of each dynamic energy module.

4. The drive device with multiple swinging blocks drivingly connected with each other as claimed in claim 1, wherein the gear of each dynamic energy module of the driving unit has a small-diameter section engaged with the teeth of the flywheel and two large-diameter sections respectively axially attached to two sides of the small-diameter section and radially outward extending, the swinging block of each dynamic energy module having two side block sections respectively symmetrically secured to outer sides of the large-diameter sections.

5. The drive device with multiple swinging blocks drivingly connected with each other as claimed in claim 2, wherein the gear of each dynamic energy module of the driving unit has a small-diameter section engaged with the teeth of the flywheel and two large-diameter sections respectively axially attached to two sides of the small-diameter section and radially outward extending, the swinging block of each dynamic energy module having two side block sections respectively symmetrically secured to outer sides of the large-diameter sections.

6. The drive device with multiple swinging blocks drivingly connected with each other as claimed in claim 5, wherein the driving member of the actuating unit and the driven members are respectively drivingly connected with the large-diameter sections of the gears.

7. The drive device with multiple swinging blocks drivingly connected with each other as claimed in claim 1, wherein the dynamic energy modules are positioned under the flywheel and the intervals between any two adjacent dynamic energy modules are equal to each other.

8. The drive device with multiple swinging blocks drivingly connected with each other as claimed in claim 2, wherein the dynamic energy modules are positioned under the flywheel and the intervals between any two adjacent dynamic energy modules are equal to each other.

9. The drive device with multiple swinging blocks drivingly connected with each other as claimed in claim 4, wherein the dynamic energy modules are positioned under the flywheel and the intervals between any two adjacent dynamic energy modules are equal to each other.

10. The drive device with multiple swinging blocks drivingly connected with each other as claimed in claim 5, wherein the dynamic energy modules are positioned under the flywheel and the intervals between any two adjacent dynamic energy modules are equal to each other.

11. The drive device with multiple swinging blocks drivingly connected with each other as claimed in claim 6, wherein the dynamic energy modules are positioned under the flywheel and the intervals between any two adjacent dynamic energy modules are equal to each other.
